# EUROPEAN PATENT APPLICATION

(11) **EP 1 755 330 A1**
(43) Date of publication of application: **21.02.2007**
(21) Application number: 06012806.3
(22) Date of filing: 22.06.2006
(51) Int. Cl.: H04N 5/00, H04N 7/24

(54) **System and method for smoothing channel changing in internet protocol television systems**

(30) Priority: 16.08.2005 US 204440
(71) Applicant: Alcatel USA Sourcing, L.P., 75075 Plano (US)
(72) Inventor: Zriny, Donald, P., Lucas, TX 75002 (US); Skoog, Frederick, H., Colleyville, TX 76034 (US); Ransom, Maurice, Niel, Raleigh, NC 27615 (US)
(74) Representative: Dreiss, Fuhlendorf, Steimle & Becker

(57) **Abstract**

System and method of implementing a channel change in an Internet Protocol Television ("IPTV") system are described. In one embodiment, method comprises steps of, responsive to a channel change request, decoding and displaying a video stream of a requested channel, wherein the displayed video stream has a resolution quality less than a normal resolution quality; increasing the resolution quality of the displayed video stream by an incremental amount Δ*R*; and subsequent to the increasing, determining whether the resolution quality of the displayed video stream is equal to the normal resolution quality and, responsive to a negative determination, repeating the increasing and determining.

## Description

This invention was made under the support of the United States Government, Department of Commerce, National Institute of Standards and Technology (NIST), Award Number 70NANB3H3053. The United States Government has certain rights in the invention.

### CROSS-REFERENCE TO RELATED APPLICATION(S)

This application discloses subject matter related to the subject matter disclosed in the following commonly owned co-pending patent application(s): (i) "SYSTEM AND METHOD FOR IMPLEMENTING CHANNEL CHANGE OPERATIONS IN INTERNET PROTOCOL TELEVISION SYSTEMS," filed , Application No.: (Attorney Docket No. 1285-0168US), in the name(s) of: Frederick H. Skoog, which is (are) hereby incorporated by reference.

### BACKGROUND OF THE INVENTION

### Technical Field of the Invention

The present invention generally relates to Internet protocol television ("IPTV") systems. More particularly, and not by way of any limitation, the present invention is directed to a system and method for smoothing the transition in the display of video that occurs responsive to a channel change in such systems.

### Description of Related Art

IPTV has become a common denominator for systems in which television and/or video signals are distributed to subscribers using a broadband connection, such as DSL, over Internet protocol. In general, IPTV systems utilize a digital broadcast signal that is sent by way of a broadband connection (e.g., DSL) and a set top box ("STB") that is programmed with software that can handle subscriber requests to access media sources via a television connected to the STB. A decoder in the STB handles the task of decoding received IP video signals and converting them to standard television signals for display on the television.

Because DSL is a bandwidth-limited medium, changing channels in IPTV networks necessitates that compromises be made between the speed at which the channel change can be completed and the quality of the video presented to the subscriber immediately following the channel change request. One method proposed for reducing the channel transition time in an IPTV system responsive to a channel change request is to switch to a lower resolution, lower bandwidth video stream with a high I-Frame rate ("companion video stream") for the new channel for a short period of time immediately after the new channel is selected. This allows the STB to display the new channel on the TV more quickly. Once enough of the normal (i.e., higher resolution, higher bandwidth) video stream is present at the STB, display of the companion video stream is terminated and the normal video stream is displayed. This leads to a better viewing experience than waiting for sufficient information on the normal stream before displaying the newly selected channel.

A deficiency inherent in the foregoing solution is that there is a noticeable "snap" in the sharpness of the video image displayed during the transition from the companion video stream to the normal video stream. Such a snap is undesirable, as it is also an irritant to the video subscriber/viewer.

### SUMMARY OF THE INVENTION

Therefore, set forth herein is a method and system for smoothing the video transition that occurs responsive to a channel change in IPTV systems.

One embodiment is a method of implementing a channel change in an Internet Protocol Television ("IPTV") system. The method comprises steps of, responsive to a channel change request, decoding and displaying a video stream of a requested channel, wherein the displayed video stream has a resolution quality less than a normal resolution quality; increasing the resolution quality of the displayed video stream by an incremental amount Δ*R*; and subsequent to the increasing, determining whether the resolution quality of the displayed video stream is equal to the normal resolution quality and, responsive to a negative determination, repeating the increasing and determining.

Another embodiment is a system for implementing a channel change in an Internet Protocol Television ("IPTV") network. The system comprises means responsive to a channel change request for decoding and displaying a video stream of a requested channel, wherein the displayed video stream has a resolution quality less than a normal resolution quality; means for increasing the resolution quality of the displayed video stream by an incremental amount Δ*R*; and means for determining whether the increased resolution quality of the displayed video stream is equal to the normal resolution quality and for repeating the increasing and determining responsive to a negative determination.

Another embodiment is a set top box for implementing a channel change in an Internet Protocol Television ("IPTV") system responsive to a channel change request, the set top box having access to a normal video stream and a companion video stream for the requested channel. The set top box comprises a decoder for decoding the companion video stream for display on a TV associated with the set top box; means responsive to receipt of a sufficient amount of the normal video stream for causing the decoder to increase the resolution quality of the displayed video stream by an incremental amount Δ*R*; and means for determining whether the increased resolution quality of the displayed video stream is equal to a resolution quality of the normal video stream and for repeating the increasing and determining responsive to a negative determination.

### BRIEF DESCRIPTION OF THE DRAWINGS

A more complete understanding of the present invention may be had by reference to the following Detailed Description when taken in conjunction with the accompanying drawings wherein:

FIG. 1 depicts a system block diagram of an IPTV system in accordance with one embodiment;

FIG. 2A depicts a timing diagram of a prior art video resolution transition responsive to a channel change request;

FIG. 2B depicts a timing diagram of a video resolution transition responsive to a channel change request in accordance with one embodiment; and

FIG. 3 depicts a flowchart of the operation of an embodiment for implementing the video resolution transition depicted in FIG. 2B.

### DETAILED DESCRIPTION OF THE DRAWINGS

Embodiments of the invention will now be described with reference to various examples of how the invention can best be made and used. Like reference numerals are used throughout the description and several views of the drawings to indicate like or corresponding parts, wherein the various elements are not necessarily drawn to scale.

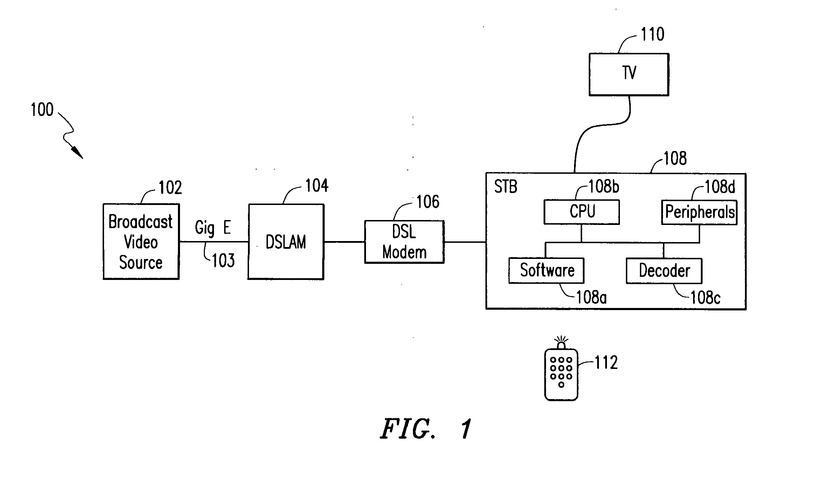

FIG. 1 is a system block diagram of a IPTV network 100 in accordance with one embodiment. As illustrated in FIG. 1, a broadcast video source (BVS) 102 is connected via a Gigabit Ethernet ("GigE") connection 103 to an access network comprising a Digital Subscriber Line Access Multiplexer ("DSLAM") 104. The BVS 102 performs multidescription coding; that is, it codes a normal video stream and a corresponding companion video stream for each of a plurality of broadcast channels available for selection by a subscriber. All of the video streams coded by the BVS 102 are provided to the DSLAM 104 via the GigE connection 103. The DSLAM 104 functions to connect one or more DSL modems, such as a DSL modem 106, to the connection 103.

In general, IPTV employs a digital broadcast signal that is sent by way of a broadband connection (e.g., DSL) and an STB, such as an STB 108. The STB 108 is programmed with software instructions 108a executable by a CPU 108b for handling subscriber requests to access media sources and controlling operation of components of the STB 108. The STB 108 further includes a decoder 108c for decoding the received IP video stream, as well as one or more peripherals 108d. A television ("TV") 110 is connected to the STB 108. It will be recognized that the STB 108 may be implemented as a standalone unit or may be integrated into the TV 110. As previously noted, the STB 108 handles the task of decoding the received IP video signals and converting them to standard television signals for display on the TV 110.

Channel changing is a function that occurs responsive to a TV viewer selecting a new broadcast channel to be displayed on the TV 110, e.g., by using a remote control 112 associated with the STB 108. It will be recognized that the first operation of the STB 108 responsive to a channel change request is to send a first control message to the DSLAM 104 to leave the IP multicast group comprising the channel currently being viewed. This action stops the video stream for the current channel from entering the DSL access facilities for the associated STB 108. The STB 108 simultaneously issues a control message to the DSLAM 104 to join the IP multicast group comprising the newly selected channel and its associated lower resolution companion video stream. Upon receipt of the join control message, the DSLAM 104 joins the subscriber to the broadcast group pair for the newly selected channel.

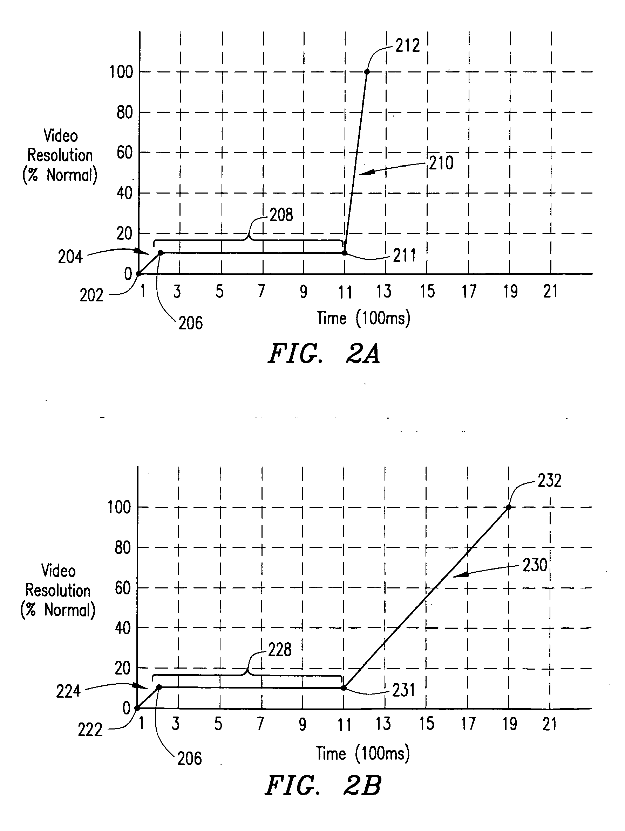

FIG. 2A is a graph illustrating a prior art transition from reduced video resolution corresponding to a companion video stream to normal video resolution corresponding to a normal video stream responsive to a channel change request in an IPTV system. As illustrated in FIG. 2A, after a channel change request at a point 202, a first transition 204 corresponds to the transition from no video being displayed (i.e., 0% of normal video quality) at the point 202 to the companion video stream being displayed at a point 206. It will be recognized that, although in the illustrated embodiment, the quality of the companion video stream is shown as being approximately 10% of that of the normal video stream, the quality of the companion video stream could be anywhere in the range of 5% to 75% of normal video stream quality, depending on the desired results and other constraints.

After a period of time 208, when adequate information is available at the decoder 108c to fully reconstruct the normal video stream, a sharp transition 210 to 100% normal video resolution is begun at a point 211 and is completed at a point 212; i.e., within approximately 100 ms.

FIG. 2B is a graph illustrating transition from reduced video resolution corresponding to a companion video stream to normal video resolution corresponding to a normal video stream responsive to a channel change request in an IPTV system according to one embodiment. As illustrated in FIG. 2B, after a channel change request at a point 222, a first transition 224 corresponds to the transition from no video being displayed (i.e., 0% of normal video quality) at the point 222 to the companion video stream being displayed at the point 226. It will be recognized that, although in the illustrated embodiment, the quality of the companion video stream is shown as being approximately 10% of that of the normal video stream, the quality of the companion video stream could be anywhere in the range of 5% to 75% of the normal video stream quality, depending on the desired results and other constraints.

After a period of time 228, when adequate information is available at the decoder 108c to reconstruct the normal video stream, a longer, less immediate, transition 230 to 100% normal video resolution is begun at a point 231 and is completed at a point 232; e.g., within approximately 900ms or thereabouts. It will be recognized that the smoother transition 230 illustrated in FIG. 2B will be less irritating to the TV viewer than the sharp transition 211 illustrated in FIG. 2A.

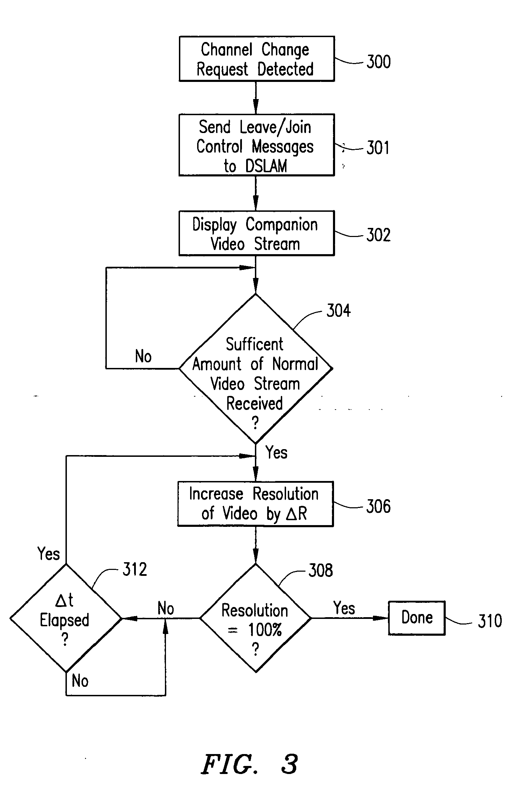

FIG. 3 is a flowchart illustrating operation of the STB 108 to effectuate the smooth transition 230 as illustrated in FIG. 2B. In step 300, a channel change request is detected. In step 301, the STB sends a leave multicast group message to terminate the current channel and a join multicast group message to begin display of the requested channel. In step 302, the STB transitions from no video displayed to display of the companion video stream associated with the newly requested channel. In step 304, a determination is made whether a sufficient amount of the normal video stream has been received at the decoder 108c. If not, execution remains at step 304 until a positive determination is made, at which point execution proceeds to step 306.

In step 306, the decoder 108c increases the resolution of the video displayed on the TV 110 by a predetermined amount Δ*R,* e.g., Δ*R* = 5% of normal resolution, such that if the companion video stream is 10% of normal resolution, an increase of 5% will result in a video stream that is 15% of normal resolution. In step 308, a determination is made whether the video display is at a desired level of resolution, e.g., 100% of the normal video stream quality. If so, execution terminates in step 310; otherwise, in step 312 a determination is made whether a predetermined time period Δ*t* has elapsed since the performance of step 306. If not, execution remains at step 312 until a positive determination is reached, at which point execution returns to step 306. In this manner, the resolution of the video displayed on the TV is ramped up gradually so that it is hardly noticeable to the TV viewer.

It will be recognized that a smaller Δ*t* and larger Δ*R* will result in a smoother transition from reduced resolution to normal resolution; however, it will also lengthen the amount of time needed to make the transition. Clearly, therefore, the values for Δ*t* and Δ*R* need to be selected with these issues in mind. Additionally, these parameters can be fixed or adjustable on a per-application basis to achieve a desired visual result.

An advantage of the embodiments described herein is that they remove the obvious, visually distracting "snap" in video resolution that occurs soon after a channel change request in IPTV systems.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method of implementing a channel change in an Internet Protocol Television ("IPTV") system, the method comprising steps of:
responsive to a channel change request, decoding and displaying a video stream of a requested channel, wherein the displayed video stream has a resolution quality less than a normal resolution quality;
increasing the resolution quality of the displayed video stream by an incremental amount *ΔR*; and
subsequent to the increasing, determining whether the resolution quality of the displayed video stream is equal to the normal resolution quality and, responsive to a negative determination, repeating the increasing and determining.

2. The method of claim 1 wherein the increasing is performed responsive to receipt of a sufficient amount of a normal video stream of the requested channel.

3. The method of claim 1 further comprising waiting a period of time Δ*t* after performing the increasing before performing the determining.

4. The method of claim 3 wherein a value of Δ*t* is adjustable.

5. The method of claim 3 wherein a value of Δ*t* is fixed.

6. The method of claim 1 wherein a value of Δ*R* is adjustable.

7. The method of claim 1 wherein a value of Δ*R* is fixed.

8. A system for implementing a channel change in an Internet Protocol Television ("IPTV") network, the system comprising:
means responsive to a channel change request for decoding and displaying a video stream of a requested channel, wherein the displayed video stream has a resolution quality less than a normal resolution quality;
means for increasing the resolution quality of the displayed video stream by an incremental amount *ΔR*; and
means for determining whether the increased resolution quality of the displayed video stream is equal to the normal resolution quality and for repeating the increasing and determining responsive to a negative determination.

9. The system of claim 8 wherein the means for increasing comprises a decoder.

10. The system of claim 8 wherein the means for increasing is responsive to receipt of a sufficient amount of a normal video stream of the requested channel.

11. The system of claim 8 further comprising means for waiting a period of time Δ*t* after performing the increasing before performing the determining.

12. The system of claim 11 wherein a value of *Δt* is adjustable.

13. The system of claim 11 wherein a value of Δ*t* is fixed.

14. The system of claim 8 wherein a value of Δ*R* is adjustable.

15. The system of claim 8 wherein a value of Δ*R* is fixed.

16. A set top box for implementing a channel change in an Internet Protocol Television ("IPTV") system responsive to a channel change request, the set top box having access to a normal video stream and a companion video stream for the requested channel, the set top box comprising:
a decoder for decoding the companion video stream for display on a TV associated with the set top box;
means responsive to receipt of a sufficient amount of the normal video stream for causing the decoder to increase the resolution quality of the displayed video stream by an incremental amount Δ*R*; and
means for determining whether the increased resolution quality of the displayed video stream is equal to a resolution quality of the normal video stream and for repeating the increasing and determining responsive to a negative determination.

17. The set top box of claim 16 further comprising means for waiting a period of time Δ*t* after performing the increasing before performing the determining.

18. The set top box of claim 17 wherein a value of Δ*t* is adjustable.

19. The set top box of claim 17 wherein a value of Δ*t* is fixed.

20. The set top box of claim 16 wherein a value of Δ*R* is adjustable.

21. The set top box of claim 16 wherein a value of Δ*R* is fixed.

22. The set top box of claim 16 wherein the set top box is integrated into the TV associated therewith.
